# EUROPÄISCHE PATENTSCHRIFT

(11) **EP 3 412 392 B1**
(45) Veröffentlichungstag und Bekanntmachung des Hinweises auf die Patenterteilung: **01.09.2021**
(21) Anmeldenummer: 17400037.2
(22) Anmeldetag: 09.06.2017
(51) Int. Cl.: B23D 45/16, B23D 47/12, B25F 5/00, B27B 5/38, F16B 43/02

(54) **HANDGEFÜHRTES ARBEITSGERÄT MIT EINEM WERKZEUG UND EINER BREMSEINRICHTUNG FÜR DAS WERKZEUG**
HAND-HELD WORK DEVICE WITH A TOOL AND A BRAKING DEVICE FOR THE TOOL
APPAREIL DE TRAVAIL MANUEL COMPRENANT UN OUTIL ET UN DISPOSITIF DE FREIN POUR L'OUTIL

(43) Veröffentlichungstag der Anmeldung: 12.12.2018
(73) Patentinhaber: Andreas Stihl AG & Co. KG, 71336 Waiblingen (DE)
(72) Erfinder: LEVIEN, Patrick, 73061 Ebersbach (DE); DEIGENDESCH, Tobias, 71522 Backnang (DE); KLEIN, Alexander, 71332 Waiblingen (DE); MAIER, Georg, 71394 Kernen (DE); HANUßEK, Sebastian, 71686 Remseck (DE)
(74) Vertreter: Reinhardt, Annette

(56) Entgegenhaltungen:
- EP-A2- 0 072 610
- US-A- 3 476 223
- US-A- 4 402 138
- US-A- 4 573 556
- US-A1- 2013 259 600
- US-A1- 2016 377 109
- US-A1- 2017 072 482

## Beschreibung

Die Erfindung betrifft ein handgeführtes Arbeitsgerät mit einem Werkzeug und mit einer Bremseinrichtung für das Werkzeug der im Oberbegriff des Anspruchs 1 angegebenen Gattung.

Aus der WO 2015/180829 A1 ist ein gattungsgemäßes Arbeitsgerät, gemäß dem Oberbegriff des Anspruchs 1, nämlich ein Trennschleifer bekannt. Der Trennschleifer besitzt einen am Motorgehäuse befestigten Ausleger, an dem ein Elektromagnet einer Bremseinrichtung festgelegt ist. Ein Betätigungselement, nämlich ein Schwenkhebel, der Bremseinrichtung ist beabstandet zum Elektromagnet gelagert und trägt einen Anker, der mit dem Elektromagneten zusammenwirkt. Bei der WO 2015/180829 A1 ist in einer Ausführungsvariante vorgesehen, den am Betätigungselement gehaltenen Anker über ein Dämpfungselement am Betätigungselement zu fixieren. Dadurch ist der Anker gegenüber dem Betätigungselement zum Ausgleich von Toleranzen geringfügig beweglich.

Die US 2013/0259600 A1 und die US 2016/0377109 A1 offenbaren Befestigungsanordnungen, die einen Winkel zwischen einer Anlagefläche und der Unterseite des Schraubenkopfs einer Befestigungsschraube ausgleichen.

Der Erfindung liegt die Aufgabe zugrunde, ein handgeführtes Arbeitsgerät mit einem Werkzeug und einer Bremseinrichtung zu schaffen, bei dem auch unter ungünstigen Arbeitsbedingungen kein versehentliches Auslösen der Bremse erfolgt.

Es hat sich gezeigt, dass im Betrieb Schwingungen entstehen, die zu deutlichen Relativbewegungen des Elektromagneten gegenüber dem Betätigungselement führen. Die im Stand der Technik beschriebene Fixierung des Ankers über ein Dämpfungselement lässt zwar ein geringfügiges Verkippen von Anker und Ankerbolzen gegenüber dem Betätigungselement zu. Wenn jedoch eine Relativbewegung zwischen Betätigungselement und Elektromagnet auftritt, bewirkt dieses Verkippen eine Schrägstellung des Ankers gegenüber dem Elektromagneten, was eine erhebliche Verringerung der auf den Anker wirkenden Haltekräfte des Elektromagneten bedingt. Durch die Schrägstellung des Ankers gegenüber dem Elektromagneten löst sich der Anker vom Elektromagneten, und das Betätigungselement wird in seine gelöste Stellung verstellt, in der das Bremselement das Werkzeug bremst. Dies bedingt ungewollte Unterbrechungen im Arbeitsablauf, die für einen Bediener störend sind und führt außerdem zu erhöhtem Verschleiß des Bremselements.

Die vorliegende Erfindung sieht nun vor, den Anker über ein Schwenkgelenk um mindestens eine Schwenkachse schwenkbar an dem Ankerbolzen zu lagern. Dadurch kann der Anker gegenüber dem Ankerbolzen verschwenken. Eine durch eine Relativbewegung zwischen Elektromagnet und Betätigungselement bedingte Schrägstellung des Ankerbolzens bewirkt aufgrund des Schwenkgelenks nicht zwangsläufig eine Schrägstellung des Ankers. Der Anker behält auch bei einer Querverschiebung des Elektromagneten seine Orientierung gegenüber dem Elektromagneten bei. Ein Ablösen des Ankers vom Elektromagneten ist vermieden. Dadurch wird auf einfache Weise vermieden, dass der Anker sich gegenüber dem Elektromagneten schrägstellt und dadurch die Haltekräfte, die der Elektromagnet auf den Anker ausübt, verringert.

In vorteilhafter Gestaltung liegt der Anker in der fixierten Stellung, in der das Bremselement das Werkzeug nicht bremst, an einer Anlageebene an dem Joch an, und mindestens eine Schwenkachse liegt parallel zur Anlageebene. Die Schwenkachse ist dabei eine Schwenkachse des Schwenkgelenks, über das der Anker an dem Ankerbolzen schwenkbar gelagert ist. Dadurch kann ein Verkippen des Ankerbolzens durch ein entgegengerichtetes Schwenken des Ankers gegenüber dem Ankerbolzen um die Schwenkachse ausgeglichen und die Ausrichtung des Ankers beibehalten werden. Auch eine Anordnung der Schwenkachse senkrecht zur Anlageebene, insbesondere in Längsrichtung des Ankerbolzens, kann jedoch vorteilhaft sein, um ein Verdrehen des Ankers gegenüber dem Joch des Elektromagneten zu verhindern.

Das Arbeitsgerät ist insbesondere ein Trennschleifer mit einem Ausleger. Vorteilhaft ist das Betätigungselement an einem ersten Bereich des Auslegers gelagert, und der Elektromagnet ist in einem zweiten Bereich des Auslegers befestigt. Die beiden Bereiche besitzen vorteilhaft einen Abstand zueinander. Insbesondere ist der erste Bereich näher an der Antriebsachse eines Antriebsmotors und weiter von einer Abtriebsachse, die der Drehachse eines Werkzeugs entsprechen kann, entfernt angeordnet. Der zweite Bereich ist vorteilhaft näher an der Abtriebsachse und weiter von der Antriebsachse entfernt angeordnet. Die Schwingungsanregung in den beiden Bereichen kann unterschiedlich sein. Dabei schwingt insbesondere der weiter von der Abtriebsachse und der Drehachse des Werkzeugs entfernte, näher an der Antriebsachse angeordnete erste Bereich weniger stark als der zweite Bereich. Durch die unterschiedliche Schwingung des Auslegers im Bereich des Elektromagneten und der Lagerung des Betätigungselements wird eine Relativbewegung zwischen dem Elektromagneten und dem Betätigungselement, das den Anker trägt, hervorgerufen.

Aufgrund von Vibrationen oder dergleichen kann sich das Joch in Richtung parallel zur Anlageebene gegenüber dem Betätigungselement verschieben. Dieser Verschiebung ist eine Verschwenkung des Ankerbolzens um einen Schwenkwinkel um die Schwenkachse zugeordnet. Es ist vorgesehen, dass der Schwenkwinkel, um den der Anker gegenüber dem Ankerbolzen um die Schwenkachse kippbar ist, auf den Kippwinkel, um den der Ankerbolzen bei der maximalen Verschiebung des Jochs gegenüber dem Betätigungselement verkippt, abgestimmt ist. Der Schwenkwinkel, um den der Anker gegenüber dem Ankerbolzen schwenkbar ist, ist dabei vorteilhaft mindestens so groß wie der Winkel, um den der Ankerbolzen bei der maximalen Relativverschiebung von Joch und Betätigungselement zueinander verkippt wird. Dadurch kann die im Betrieb maximal hervorgerufene Schrägstellung des Ankerbolzens vollständig durch Verschwenken des Schwenkgelenks ausgeglichen werden, so dass der Anker seine Orientierung gegenüber dem Joch des Elektromagneten auch bei maximal verkipptem Ankerbolzen beibehält.

Das Betätigungselement ist vorteilhaft ein Schwenkhebel. Vorteilhaft liegt mindestens eine Schwenkachse des Ankers gegenüber dem Ankerbolzen in einer Ebene, die senkrecht zur Schwenkachse des Schwenkhebels angeordnet ist. Die Relatiwerschiebung von Joch und Anker erfolgt überwiegend in Richtung der Schwenkachse des Schwenkhebels. Bewegungen in Bewegungsrichtung des Schwenkhebels, also in Umfangsrichtung zur Schwenkachse, können durch den Schwenkhebel selbst ausgeglichen werden. Durch die Anordnung mindestens einer Schwenkachse in einer senkrecht zur Schwenkachse des Schwenkhebels angeordneten Ebene können auch Schwenkbewegungen quer hierzu ausgeglichen werden. Bevorzugt liegt mindestens eine Schwenkachse in einer senkrecht zur Schwenkachse des Schwenkhebels angeordneten Ebene und parallel zur Anlageebene.

Vorteilhaft besitzt das Schwenkgelenk eine gekrümmte Lagerfläche. In besonders vorteilhafter Gestaltung ist die Lagerfläche teilkugelförmig. Auch eine zylindrische Lagerfläche oder eine in anderer Weise gekrümmte Lagerfläche kann jedoch vorteilhaft sein. Das Verhältnis des Radius der Lagerfläche zur Dicke des Ankers beträgt vorteilhaft von 0,3 bis 2. Der Durchmesser der Lagerfläche ist demnach vorteilhaft mindestens so groß wie die Dicke des Ankers und in bevorzugter Gestaltung größer. In besonders vorteilhafter Gestaltung beträgt der Radius der Lagerfläche zur Dicke des Ankers 0,4 bis 1, insbesondere 0,4 bis 0,8. Dadurch ergibt sich ein vergleichsweise großer Flächeninhalt der Lagerfläche und ein einfacher Aufbau. Vorteilhaft ist der Durchmesser der Lagerfläche größer als der Durchmesser des Ankerbolzens, insbesondere größer als der Durchmesser einer Öffnung im Anker, durch die der Ankerbolzen ragt. Dadurch kann die Lagerfläche unmittelbar am Anker in einem Bereich ausgebildet werden, der radial außerhalb der Öffnung, durch die der Lagerbolzen ragt, liegt, so dass sich ein einfacher, kompakter Aufbau ergibt. Die zugeordnete Lagerfläche des Ankers verläuft insbesondere gewölbt oder konisch.

Ein kompakter Aufbau wird auch erreicht, wenn die Schwenkachse des Ankers auf der dem Joch zugewandten Seite des Ankers liegt. Vorteilhaft ist der Abstand der Schwenkachse zur Anlageebene gering. Der Abstand der Schwenkachse zur Anlageebene ist vorteilhaft kleiner als der Radius der Lagerfläche. Dadurch taucht das Schwenkgelenk vorteilhaft teilweise in den Anker ein. Das Schwenkgelenk weist insbesondere nur an seiner dem Anker zugewandten Seite eine gekrümmte Form auf. Dadurch kann die über die Anlageebene aus dem Anker ragende Erstreckung des Schwenkgelenks gering gehalten werden. Das Schwenkgelenk taucht vorteilhaft nur geringfügig in den Anker ein, und die Dicke des Ankers wird bei unveränderter Baugröße nicht oder nur geringfügig durch das Schwenkgelenk verringert. Dadurch wird der magnetische Fluss nur geringfügig gestört.

Vorteilhaft ragt der Ankerbolzen durch den Anker und durch einen Befestigungsabschnitt des Betätigungselements. Der Ankerbolzen ist vorteilhaft gegenüber dem Betätigungselement schwenkbar. Die durch ein Verkippen des Ankerbolzens gegenüber dem Betätigungselement hervorgerufene Schrägstellung des Ankers wird vorteilhaft mindestens teilweise, insbesondere vollständig durch das Schwenkgelenk zwischen Anker und Ankerbolzen ausgeglichen.

Zur Begrenzung der Relativbewegungen in Querrichtung des Auslegers ist vorteilhaft eine Führung vorgesehen, die ein erstes, mit dem Anker verbundenes Führungsteil und ein zweites, mit dem Joch verbundenes Führungsteil umfasst. In fixierter Stellung des Betätigungselements wirken das erste Führungsteil und das zweite Führungsteil zusammen und führen den Anker relativ zu dem Joch in Querrichtung des Auslegers. Dadurch kann auf einfache Weise eine Begrenzung der Relativbewegungen des Jochs und des Ankers in Querrichtung des Auslegers zueinander erreicht werden. Diese Erfindung ist unabhängig von der Ausbildung eines Schwenkgelenks, über das der Anker gegenüber dem Ankerbolzen schwenkbar gelagert ist und betrifft einen hiervon unabhängigen, erfinderischen Gedanken. Die Querrichtung des Auslegers ist dabei vorteilhaft eine Richtung parallel zu einer Antriebsachse bzw. einer Abtriebsachse eines in dem Ausleger angeordneten Riementriebs. Die Querrichtung ist vorteilhaft die Richtung, die parallel zur Drehachse des Werkzeugs liegt. Die Erstreckung des Auslegers in Querrichtung ist üblicherweise gering. Daher neigt der Ausleger insbesondere in Querrichtung zu Schwingungen. Der Ausleger besitzt in Querrichtung insbesondere eine deutlich geringere Erstreckung als in Längsrichtung.

Über die Führung kann auf einfache Weise eine Positionierung von Anker und Joch zueinander erfolgen. Bei Schwingungen des Auslegers in Querrichtung kann das Betätigungselement über die Führung mitgeführt und, insbesondere aufgrund seiner Eigenelastizität, mitbewegt werden. Es kann vorgesehen sein, Maßnahmen zur Verschleißminderung eines oder beider Führungsteile zu treffen. Dadurch kann sichergestellt werden, dass bei Vibrationen im Betrieb kein oder nur geringer Verschleiß an den Führungsteilen auftritt.

Ein einfacher Aufbau ergibt sich, wenn eines der Führungsteile ein Zapfen ist, und das andere Führungsteil eine Öffnung besitzt, wobei der Zapfen in fixierter Stellung des Betätigungselements in die Öffnung ragt. Die Öffnung ist bevorzugt als Langloch ausgebildet. In fixierter Stellung des Betätigungselements ist vorteilhaft vorgesehen, dass in Querrichtung des Auslegers Spiel besteht. Das Spiel in Querrichtung des Auslegers ist vorteilhaft so gewählt, dass Relativbewegungen aufgrund des Spiels in Querrichtung vollständig durch ein Schwenkgelenk zwischen Anker und Ankerbolzen ausgeglichen werden können. Vorteilhaft besteht auch in Längsrichtung des Auslegers Spiel zwischen den Zapfen und dem Rand der Öffnung. Dies ist insbesondere dann vorteilhaft, wenn das Betätigungselement als Schwenkhebel ausgebildet ist und über das Spiel in Längsrichtung des Auslegers die Bewegung des Zapfens in die Öffnung ermöglicht wird.

Vorteilhaft wirken die Führungsteile nicht über den gesamten Betätigungsweg zusammen. Die Führungsteile wirken zumindest in fixierter Stellung des Betätigungselements zusammen und sind miteinander in Eingriff. Ein Ablösen des am Betätigungselement angeordneten und magnetisch mit dem Elektromagneten verbundenen Ankers aufgrund von Querschwingungen des Elektromagneten ist durch die miteinander in Eingriff stehenden Führungsteile sicher vermieden. In vorteilhafter Gestaltung sind die Führungsteile in gelöster Stellung des Betätigungselements voneinander entfernt angeordnet. In gelöster Stellung des Betätigungselements, also wenn Anker und Elektromagnet nicht magnetisch verbunden sind, ist die relative Lage von Anker und Elektromagnet von untergeordneter Bedeutung, so dass in dieser Position auf ein Zusammenwirken der Führungsteile und eine Positionierung von Anker und Joch zueinander in Querrichtung verzichtet werden kann. Bevorzugt wirken die Führungsteile erst nach Überstreichen von mindestens dem halben Verstellweg von der gelösten Stellung zu der fixierten Stellung zusammen und führen den Anker gegenüber dem Joch. Dadurch kann der Zapfen vergleichsweise kurz ausgebildet werden, und es ergibt sich ein einfacher Aufbau. Der Verstellweg ist der Weg, den eines der Führungsteile gegenüber dem anderen Führungsteil bei Verstellen von der gelösten zur fixierten Stellung zurücklegt.

Vorteilhaft besitzt mindestens eines der Führungsteile eine Einführschräge. Dadurch kann auf einfache Weise sichergestellt werden, dass die Führungsteile sich bei der Verstellung des Betätigungselements in die fixierte Stellung zur Bildung der Führung treffen, auch wenn die Führungsteile in gelöster Stellung des Betätigungselements voneinander entfernt angeordnet sind. In einfacher Gestaltung ist die Einführschräge an dem Zapfen der Führung ausgebildet. Dadurch kann eine vergleichsweise große Einführschräge auf einfache Weise bereitgestellt werden. Die Einführschräge ist bevorzugt als konischer Abschnitt des Zapfens ausgebildet. Die Breite der Einführschräge entspricht vorteilhaft mindestens dem Weg, um den sich die Führungsteile in Querrichtung relativ zueinander bewegen.

Das Betätigungselement ist insbesondere ein Schwenkhebel, und der Abstand der Schwenkachse des Schwenkhebels zur Befestigungsstelle des Elektromagneten am Ausleger beträgt mindestens 5 cm. In bevorzugter Gestaltung beträgt der Abstand mindestens 8 cm. Insbesondere bei einem vergleichsweise großen Abstand zwischen Schwenkachse und Befestigungsstelle des Elektromagneten ist die Führung zwischen dem Betätigungselement und dem Elektromagneten vorteilhaft, da sich aufgrund der vergleichsweise großen Länge des Schwenkhebels große Relativbewegungen des Auslegers gegenüber dem freien Ende des Schwenkhebels ergeben können.

Vorteilhaft weist die Bremsvorrichtung eine Kniehebelanordnung auf, die einen ersten Hebel und einen zweiten Hebel umfasst. Der erste Hebel ist um eine erste Schwenkachse gegenüber dem Betätigungselement schwenkbar gelagert, und der zweite Hebel ist an dem ersten Hebel um eine zweite Schwenkachse schwenkbar gelagert. Der zweite Hebel ist an einer dritten Schwenkachse an einem dritten Hebel gelagert, wobei der dritte Hebel auf das Bremselement wirkt. Um ein Auslösen der Bremsvorrichtung mit geringen Betätigungskräften zu erreichen, ist vorgesehen, dass die Kniehebelanordnung sich weder in gelöster Stellung noch in fixierter Stellung in der überdrückten Position befindet. Hierzu ist vorgesehen, dass die erste Schwenkachse und die dritte Schwenkachse in einer Kipphebelebene liegen und die zweite Schwenkachse in der gelösten Stellung und in der fixierten Stellung auf der gleichen Seite der Kipphebelebene angeordnet ist. Dadurch ist ein Überdrücken der zweiten Schwenkachse über den Totpunkt nicht notwendig, so dass eine Auslösefeder, die die Bremsvorrichtung vorspannt, vergleichsweise schwach ausgeführt sein kann.

Für das Schwenkgelenk ist vorteilhaft vorgesehen, dass das Schwenkgelenk aus einem formstabilen Material besteht. Das Schwenkgelenk ist insbesondere nicht als Dämpfungselement ausgebildet.

Ausführungsbeispiele der Erfindung werden im Folgenden anhand der Zeichnung erläutert. Es zeigen:
- Fig. 1: eine teilgeschnittene Seitenansicht eines Trennschleifers, wobei die Schnittebene im Ausleger liegt,
- Fig. 2: eine schematische Schnittdarstellung durch den Antrieb des Trennschleifers aus Fig. 1,
- Fig. 3: eine Draufsicht auf den Trennschleifer aus Fig. 1 in Richtung des Pfeils III in Fig. 1,
- Fig. 4: eine vergrößerte Darstellung des geschnitten dargestellten Bereichs des Auslegers des Trennschleifers aus Fig. 1,
- Fig. 5: eine Seitenansicht des Auslegers und der Schutzhaube, wobei einige Komponenten des Auslegers nicht dargestellt sind,
- Fig. 6: eine ausschnittsweise vergrößerte Darstellung des Bereichs des Schwenkhebels aus Fig. 5 mit dem Schwenkhebel in gelöster Stellung,
- Fig. 7: den Bereich aus Fig. 6 mit dem Schwenkhebel in fixierter Stellung,
- Fig. 8: eine teilgeschnittene Draufsicht auf den Trennschleifer,
- Fig. 9 und Fig. 10: perspektivische Darstellungen des Schwenkhebels und der mit dem Schwenkhebel zusammenwirkenden Komponenten,
- Fig. 11: einen Schnitt durch den Elektromagneten und den Schwenkhebel in Querrichtung des Trennschleifers,
- Fig. 12: eine teilgeschnittene Darstellung des Elektromagneten, des Ankers und des Schwenkhebels,
- Fig. 13: eine teilgeschnittene Darstellung entsprechend Fig. 12 durch den Elektromagneten, den Anker und den Ankerbolzen,
- Fig. 14: eine schematische Darstellung eines Ausführungsbeispiels der Erfindung,
- Fig. 15: eine schematische Darstellung einer Anordnung nach dem Stand der Technik,
- Fig. 16: eine schematische Darstellung der erfindungsgemäßen Anordnung.

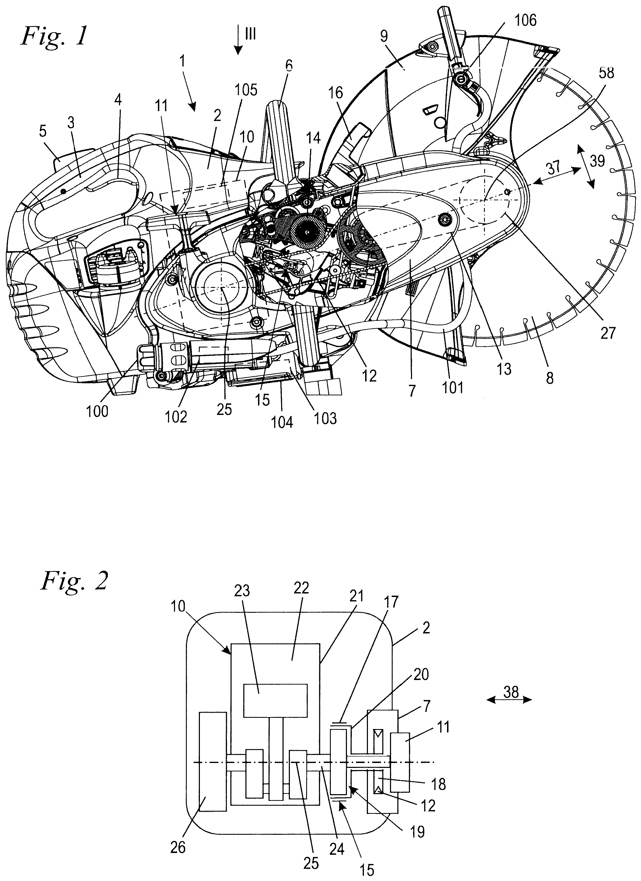

Fig. 1 zeigt als Ausführungsbeispiel für ein handgeführtes Arbeitsgerät einen Trennschleifer 1. Der Trennschleifer 1 besitzt ein Gehäuse 2, an dem ein Handgriff 3 sowie ein Bügelgriff 6 zum Führen des Trennschleifers 1 im Betrieb festgelegt sind. Am Handgriff 3, der im Ausführungsbeispiel an der Oberseite des Gehäuses 2 angeordnet ist, sind ein Gashebel 4 sowie eine Gashebelsperre 5 zur Bedienung eines im Gehäuse 2 angeordneten Antriebsmotors 10 vorgesehen. Der Handgriff 3 kann auch als hinterer Handgriff ausgeführt sein. Der Antriebsmotor 10 ist vorzugsweise ein Verbrennungsmotor, insbesondere ein Einzylinder-Zweitaktmotor. Zum Starten des Antriebsmotors 1 ist eine Anwerfvorrichtung 11, im Ausführungsbeispiel ein Seilzugstarter vorgesehen.

Es kann auch vorgesehen sein, dass der Antriebsmotor 10 ein Elektromotor ist, der vorzugsweise über einen Akku mit Energie versorgt wird.

Der Trennschleifer 1 besitzt einen Ausleger 7, der im Ausführungsbeispiel am Gehäuse 2 fixiert ist. Am freien Ende des Auslegers 7 ist eine Trennscheibe 8 um eine Drehachse 58 rotierend gelagert. Die Trennscheibe 8 ist das Werkzeug des Trennschleifers 1 und über einen Riementrieb vom Antriebsmotor 10 angetrieben. Auch ein anderer Antrieb der Trennscheibe 8 kann vorteilhaft sein. Der Riementrieb ist im Ausführungsbeispiel als zweistufiger Riementrieb ausgeführt und umfasst einen ersten Antriebsriemen 12 und einen zweiten Antriebsriemen 13. Zum Spannen der Antriebsriemen 12 und 13 sind Spannrollen 14 vorgesehen, von denen in Fig. 1 eine gezeigt ist. Der Riementrieb ist als Untersetzungsgetriebe ausgebildet, so dass die Drehzahl der Trennscheibe 8 geringer als die des Antriebsmotors 10 ist.

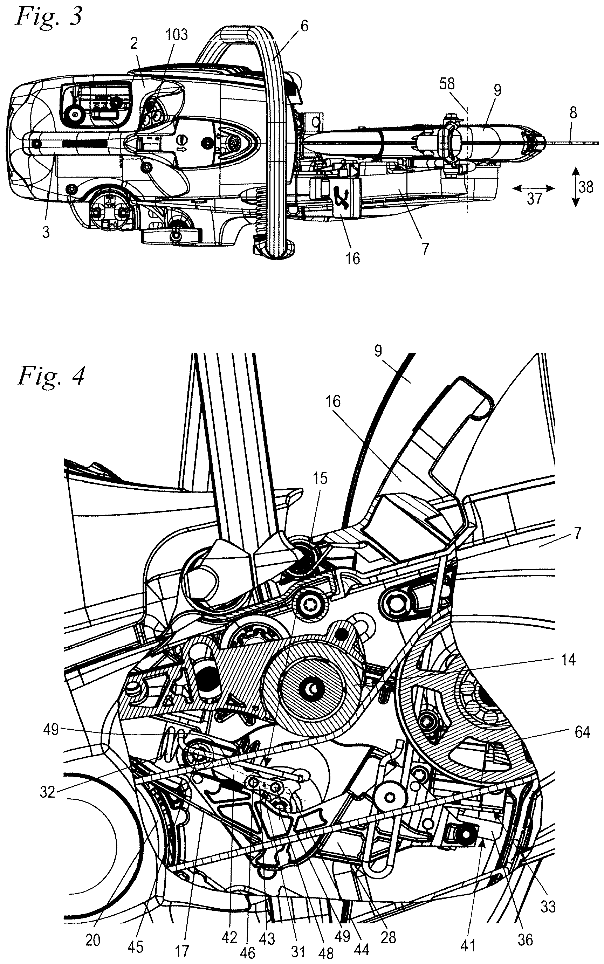

Die Trennscheibe 8 ist über einen Teil ihres Umfangs von einer Schutzhaube 9 abgedeckt. Im Betrieb entsteht beim Einsatz der Trennscheibe 8 zum Trennen von Gestein eine große Menge an Staub. Zum Binden des Staubs und zum Kühlen der Trennscheibe 8 ist eine Flüssigkeitsversorgung, insbesondere eine Wasserversorgung vorgesehen. Die Flüssigkeitsversorgung umfasst einen Flüssigkeitsanschluss 100 zum Anschluss an eine externe Flüssigkeitszufuhr. Der Flüssigkeitsanschluss 100 ist über eine Flüssigkeitsleitung 101 mit mindestens einem Zuführventil 106 an der Schutzhaube 9 verbunden. Zur Steuerung der zugeführten Flüssigkeitsmenge ist ein Ventil 102 vorgesehen, das elektrisch gesteuert ist. Die vom Bediener gewünschte zuzuführende Flüssigkeitsmenge kann über ein Bedienfeld 107 (Fig. 3) an der Oberseite des Gehäuses 2 eingestellt werden. Es ist eine Steuereinrichtung 103 vorgesehen, die das Ventil 102 entsprechend ansteuert. Die Steuereinrichtung 103 ist im Ausführungsbeispiel an der Unterseite des Gehäuses 2 angeordnet. Die Steuereinrichtung 103 ist im Ausführungsbeispiel nicht im Gehäuse 2 angeordnet, sondern außerhalb des Gehäuses 2 und von einer separaten Abdeckung 104 nach unten abgedeckt. Die Steuereinrichtung 103 ist vorteilhaft vergossen, so dass sich durch das Vergießen und die Abdeckung 104 ein doppelter Schutz vor Verschmutzungen oder Flüssigkeit ergibt.

Die Abdeckung 104 ist am Gehäuse 2 vorteilhaft über Schnappverbindungen und/oder Schraubverbindungen fixiert. Die Steuereinrichtung 103 liegt in der Abdeckung 104 vorteilhaft mit Abstand. Ein definierter Abstand zwischen Steuereinrichtung 103 und Abdeckung 104 kann beispielsweise über Rippen zwischen der Steuereinrichtung 103 und der Abdeckung 104 erreicht werden. In bevorzugter Gestaltung besitzt die Abdeckung 104 mindestens eine Ablauföffnung an ihrer im üblichen Betrieb unten angeordneten Unterseite, so dass Feuchtigkeit oder Schmutz aus der Abdeckung 104 austreten kann. Es kann vorteilhaft sein, die Steuereinrichtung 103 gegenüber der Abdeckung 104 über mindestens ein Dämpfungselement abzustützen.

Zur Steuerung des Antriebsmotors 10 ist vorteilhaft ein Zündmodul 105 vorgesehen, das getrennt von der Steuereinrichtung 103 ausgebildet ist und insbesondere im oberen Bereich des Gehäuses 2 am Antriebsmotor 10 selbst angeordnet ist. Auch eine andere Anordnung des Zündmoduls 105 oder einer weiteren Steuereinrichtung zur Ansteuerung des Antriebsmotors 10 kann vorteilhaft sein.

Der Trennschleifer 1 besitzt eine Bremsvorrichtung 15. Zum Auslösen der Bremseinrichtung 15 ist vorteilhaft ein Drehratensensor vorgesehen. Im Ausführungsbeispiel ist vorgesehen, dass der Drehratensensor ebenfalls in der Steuereinrichtung 103 angeordnet ist. Der Drehratensensor ist dabei vorteilhaft zur Drehachse 58 der Trennscheibe 8 ausgerichtet. Bevorzugt liegt eine Messachse des Drehratensensors parallel zur Drehachse 58.

Der Ausleger 7 besitzt eine Längsrichtung 37, die im Ausführungsbeispiel die Verbindungsgerade der Antriebsachse und der Abtriebsachse des Riementriebs in einer Seitenansicht in Richtung der Antriebsachse bildet. Im Ausführungsbeispiel fällt die Antriebsachse mit einer Drehachse 25 einer Kurbelwelle 24 (Fig. 2) des Antriebsmotors 10 zusammen, und die Abtriebsachse ist die Drehachse 58 der Trennscheibe 8. In der Längsrichtung 37 liegt die größte Erstreckung des Auslegers 7 senkrecht zur Drehachse 58. Der Ausleger 7 besitzt eine Hochrichtung 39, die senkrecht zur Längsrichtung 37 und senkrecht zu den Drehachsen 25 und 58 ausgerichtet ist. Der Ausleger 7 besitzt außerdem eine Querrichtung 38, die in Fig. 1 senkrecht zur Blattebene ausgerichtet und in Fig. 2 gezeigt ist. Die Querrichtung 38 erstreckt sich senkrecht zur Längsrichtung 37 und senkrecht zur Hochrichtung 39.

Fig. 2 zeigt den Aufbau des Antriebs des Trennschleifers 1 im Einzelnen. Der Antriebsmotor 10 besitzt einen Zylinder 21, in dem ein Brennraum 22 ausgebildet ist. Der Brennraum 22 ist von einem Kolben 23 begrenzt, der die Kurbelwelle 24 um die Drehachse 25 rotierend antreibt. An einer Seite des Antriebsmotors 10 ist ein Lüfterrad 26 zur Förderung von Kühlluft angeordnet. Im Ausführungsbeispiel ist an der gegenüberliegenden Seite eine Fliehkraftkupplung 19 angeordnet, über die die Kurbelwelle 24 mit einer Antriebsscheibe 18 des Riementriebs zu verbinden ist. Die Fliehkraftkupplung 19 besitzt eine Kupplungstrommel 20, an deren Außenumfang ein Bremsband 17 der Bremseinrichtung 15 angeordnet ist. Die Bremseinrichtung 15 wirkt auf die Kupplungstrommel 20 der Fliehkraftkupplung 19, also an der Abtriebsseite der Fliehkraftkupplung 19. An der Außenseite des Auslegeres 7 ist die Anwerfvorrichtung 11 angeordnet.

Wie Fig. 1 zeigt, ist an der Oberseite des Auslegers 7 ein Betätigungshebel 16 angeordnet, der zum Lösen der Bremsvorrichtung 15 dient, wie im Folgenden noch näher beschrieben wird.

Die Anordnung des Betätigungshebels 16 ist auch in Fig. 3 gezeigt. Fig. 3 zeigt außerdem die Ausrichtung der Querrichtung 38 senkrecht zur Längsrichtung 37.

Fig. 4 zeigt die Gestaltung der Bremsvorrichtung 15 näher. Die Bremsvorrichtung 15 besitzt einen Schwenkhebel 28 Der Schwenkhebel 28 bildet das Betätigungselement der Bremsvorrichtung 15. Fig. 4 zeigt den Schwenkhebel 28 in einer fixierten Stellung 41.

Die Bremsvorrichtung 15 umfasst einen Elektromagneten 33, der am Ausleger 7 fixiert ist. Am Schwenkhebel 28 ist benachbart zum freien Ende des Schwenkhebels 28 ein Anker 36 angeordnet, der in der fixierten Stellung 41 am Elektromagneten 33 anliegt und durch die Magnetkraft am Elektromagneten 33 fixiert ist. Durch den Elektromagneten 33 ist der Schwenkhebel 28 in der fixierten Stellung 41 gehalten. In der fixierten Stellung 41 ist das Bremsband 17 gelöst und liegt nicht fest am Umfang der Kupplungstrommel 20 an. Dadurch kann die Fliehkraftkupplung 19 (Fig. 2) einkuppeln, wenn der Antriebsmotor 10 läuft, und über den Riementrieb die Trennscheibe 8 (Fig. 1) antreiben.

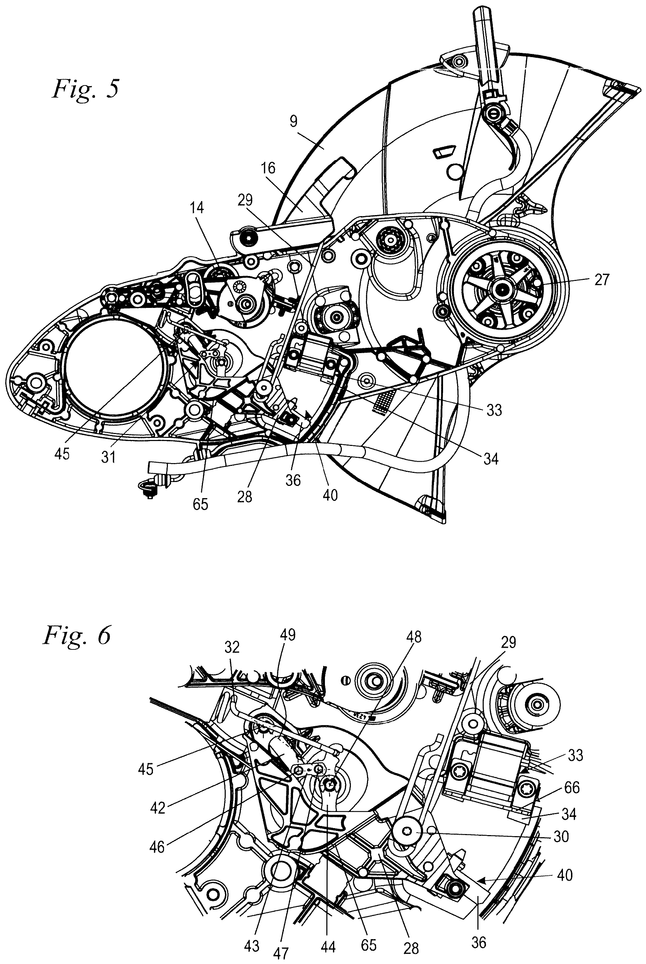

Die Bremsvorrichtung 15 besitzt eine Kniehebelanordnung 31, die auf das Bremsband 17 wirkt. Die Kniehebelanordnung 31 dient dazu, beim Verschwenken des Schwenkhebels 28 aus der in Fig. 4 gezeigten fixierten Stellung 41 in die in Fig. 5 gezeigte gelöste Stellung 40 das Bremsband 17 um die Kupplungstrommel 20 zu ziehen und dadurch die Trennscheibe 8 zu bremsen. Wie Fig. 4 zeigt, umfasst die Kniehebelanordnung 31 einen Hebel 44, der um eine Schwenkachse 48 schwenkbar an dem Schwenkhebel 28 gehalten ist. Am Hebel 44 ist an einem Ende eine Auslösefeder 32 eingehängt. An einem zweiten, in Fig. 4 vom Schwenkhebel 28 verdeckten Ende des Hebels 44 ist das Bremsband 17 mit einem Ende eingehängt. Das zweite Ende des Bremsbands 17 ist gehäusefest fixiert. Um das Bremsband 17 um die Kupplungstrommel 20 festzuziehen, muss der Hebel 44 in der Darstellung in Fig. 4 im Gegenuhrzeigersinn um die Schwenkachse 48 verschwenken. Am Hebel 44 ist zwischen der Schwenkachse 48 und dem Einhängepunkt der Auslösefeder 32 ein Hebel 43 um eine Schwenkachse 47 schwenkbar gelagert. Am zweiten Ende des Hebels 43 ist ein Hebel 42 um eine Schwenkachse 46 schwenkbar gelagert. Der Hebel 42 ist mit seinem anderen Ende um eine Schwenkachse 45 schwenkbar gelagert. Im Ausführungsbeispiel ist die Schwenkachse 45 die Schwenkachse, um die der Schwenkhebel 28 gegenüber dem Ausleger 7 schwenkbar gelagert ist. Es kann jedoch auch vorgesehen sein, dass der Hebel 42 um eine von der Schwenkachse 45 beabstandete Schwenkachse gegenüber dem Schwenkhebel 28 schwenkbar gelagert ist. Die Schwenkachsen 45, 46, 47 und 48 liegen parallel zueinander. Die Schwenkachsen 45 und 47 definieren eine Kipphebelebene 49. Zwischen den Schwenkachsen 45 und 47 liegt die Schwenkachse 46, die das Kniehebelgelenk bildet. Die Schwenkachse 46 liegt in der fixierten Stellung 41 mit geringem Abstand zur Kipphebelebene 49. In Fig. 4 ist auch eine Zwischenscheibe 64 des Riementriebs erkennbar, um die der erste Antriebsriemen 12 geführt ist.

Zum Betätigen der Bremseinrichtung 15 wird der Elektromagnet 33 abgeschaltet. Dadurch löst sich der Anker 36 vom Elektromagneten 33, und der Schwenkhebel 28 schwenkt in die in den Fig. 5 und 6 gezeigte gelöste Stellung 40. In der fixierten Stellung 41 ist die Kniehebelanordnung 31 vorgespannt, wie Fig. 4 zeigt. Dadurch, dass die Schwenkachse 46, an der die Hebel 42 und 43 miteinander verbunden sind, und der Einhängepunkt der Auslösefeder 32 am Hebel 44 auf gegenüberliegenden Seiten der Kniehebelebene 49 liegen, wirkt die Kraft der Auslösefeder 32 in Richtung auf eine Verstellung der Kniehebelanordnung 31 in Richtung auf die gelöste Stellung 40. Dieser Kraft wirkt der Elektromagnet 33 in fixierter Stellung 41 entgegen. In der fixierten Stellung 41 ist der Übertragungswinkel der Federkraft auf den Kniehebel aufgrund des nahezu gestreckten Kniehebelgelenks, das an der Achse 46 ausgebildet ist, derart reduziert, dass die Magnetkraft des Elektromagneten 33 ausreicht, um den Schwenkhebel 28 entgegen der wirkenden Federspannung der Auslösefeder 32 in der kinematisch instabilen fixierten Stellung 41 zu halten.

Wird der Elektromagnet 33 abgeschaltet, so verstellt die Auslösefeder 32 den Hebel 44. Der Hebel 44 gleitet an einer in Fig. 6 schematisch gezeigten Betätigungskontur 65 des Schwenkhebels 28 ab. Aufgrund der Ausrichtung der Betätigungskontur 65 verschwenkt der Schwenkhebel 28 um die Schwenkachse 45 in die in den Fig. 5 und 6 gezeigte gelöste Stellung 40. Dabei entfernt sich die Schwenkachse 46 weiter von der Kniehebelebene 49. Das Kniehebelgelenk knickt ein, und die Auslösefeder 32 kann den Hebel 44 verschwenken, wodurch das Bremsband 17 gespannt wird. Auch in der gelösten Stellung 40 liegen die Schwenkachse 46 und der Einhängepunkt der Auslösefeder 32 am Hebel 44 auf gegenüberliegenden Seiten der Kniehebelebene 49. Im Ausführungsbeispiel befindet sich die Schwenkachse 46 unabhängig von der Stellung der Bremseinrichtung 15 stets auf einer Seite, in der Darstellung in Fig. 4 unterhalb, der Kniehebelebene 49. Dadurch wirkt die Kniehebelanordnung 31 nicht selbsthemmend, d. h. das Kniehebelgelenk wird nie auf die gegenüberliegende Seite der Kniehebelebene 49 überdrückt. Es wird keine Rückstellfeder benötigt, die die Kniehebelanordnung 31 entsperrt. Die Kniehebelanordnung 31 wird in fixierter Stellung 41 des Schwenkhebels 28 ausschließlich durch den Elektromagneten 33 in ihrer instabilen Lage gehalten.

In Fig. 5 ist auch die Abtriebsscheibe 27 des Riementriebs gezeigt.

Zur Verstellung der Bremseinrichtung 15 aus der in den Fig. 5 und 6 gezeigten gelösten Stellung 40 des Schwenkhebels 28, in der das Bremsband 17 um die Kupplungstrommel 20 angezogen ist, in die in Fig. 4 gezeigte fixierte Stellung 41, in der die Bremse nicht auf die Kupplungstrommel 20 wirkt, verschwenkt der Bediener den Betätigungshebel 16 nach oben. Am Betätigungshebel 16 (Fig. 5) ist eine auch in Fig. 6 gezeigte Betätigungsstange 29 eingehängt. Die Betätigungsstange 29 ist an einem Führungsbolzen 30 des Schwenkhebels 28 eingehängt und verschwenkt den Schwenkhebel 28 in die fixierte Stellung 41. Die Betätigungsstange 29 ist mit einem Langloch am Führungsbolzen 30 eingehängt, so dass der Betätigungshebel 16 gegenüber dem Schwenkhebel 28 bewegt und in seine Ausgangsstellung zurückgestellt werden kann, ohne dass die Bremsvorrichtung 15 in die gelöste Stellung 40 des Schwenkhebels 28 zurückgestellt wird.

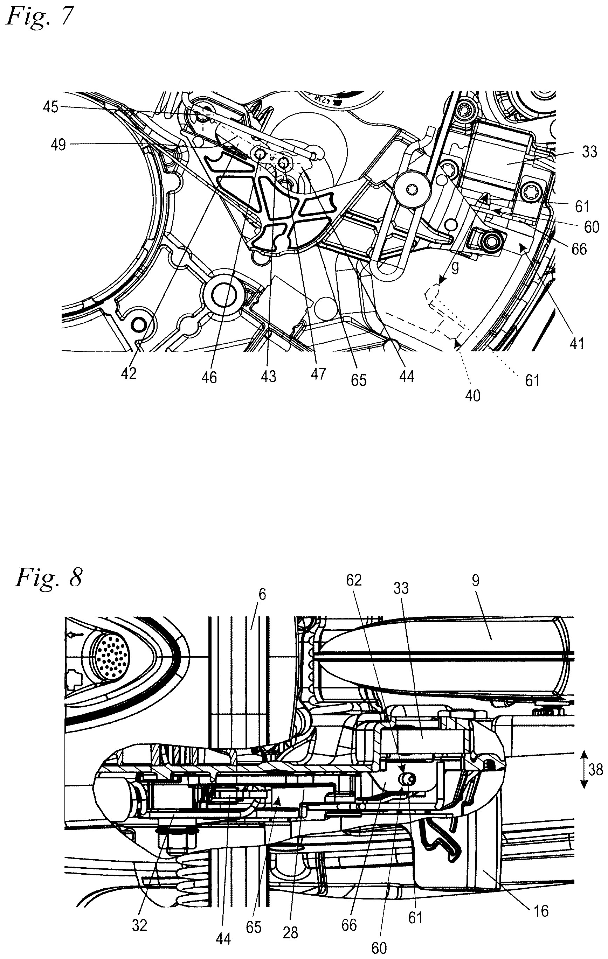

Im Betrieb wird der Ausleger 7 aufgrund der vom Antriebsmotor 10, insbesondere einem Verbrennungsmotor, erzeugten Vibrationen und/oder aufgrund von Vibrationen, die durch den Eingriff der Trennscheibe 8 in einem Werkstück hervorgerufen werden, zu Schwingungen angeregt. Aufgrund seiner Gestalt führt der Ausleger 7 insbesondere Schwingungen in Querrichtung 38 aus. Die Erstreckung des Auslegers 7 in Querrichtung 38 ist dabei im Ausführungsbeispiel geringer als die Erstreckung in anderen Raumrichtungen, insbesondere geringer als die Erstreckung in Längsrichtung 37. Durch die verhältnismäßig geringe räumliche Ausdehnung des Auslegers 7 in Querrichtung 37 gegenüber seiner Erstreckung in anderen Raumrichtungen neigt der Ausleger 7 insbesondere zu Schwingungen in Querrichtung 37. Dadurch, dass der Anker 36 und der Elektromagnet 33 in Längsrichtung 37 des Auslegers 7 entfernt voneinander am Ausleger 7 festgelegt sind, schwingen Anker 36 und Elektromagnet 33 unterschiedlich stark. Im Ausführungsbeispiel schwingt der Elektromagnet 33 mit größerer Amplitude als der Anker 36. Diese Relativbewegung in Querrichtung 38 bewirkt ein Verkippen des Ankers 36 gegenüber einem Joch 34 des Elektromagneten 33, sobald der Anker 36 der Bewegung des Jochs 34 nicht mehr folgen kann. Durch das Verkippen können die Haltekräfte des Elektromagneten 33 zu klein werden, um den Schwenkhebel 28 in der fixierten Stellung 41 zu halten. Um die Relativbewegung zu begrenzen, ist eine Führung 60 vorgesehen. Die Führung 60 ist in den Fig. 7 und 8 im Einzelnen gezeigt. Die Führung 60 umfasst einen Zapfen 61, der durch eine Öffnung 62 eines Führungsblechs 66 ragt. Das Führungsblech 66 ist im Ausführungsbeispiel L-förmig ausgebildet und am Elektromagneten 33 fixiert. Die Öffnung 62 und der Zapfen 61 begrenzen die Relativbewegung des Elektromagneten 33 gegenüber dem Anker 36 in Querrichtung 38.

In Fig. 7 ist die Lage des Zapfens 61 in gelöster Stellung 40 mit gestrichelter Linie eingezeichnet. Wie Fig. 7 zeigt, wird der Zapfen 61 zwischen der gelösten Stellung 40 und der fixierten Stellung 41 um einen Verstellweg g verstellt. Wie Fig. 7 auch zeigt, kommt der Zapfen 61 bei der Verstellung von der gelösten Stellung 40 in die fixierte Stellung 41 erst gegen Ende des Verschwenkwegs g in den Bereich der Öffnung 62 (Fig. 8). Der Zapfen 61 legt mindestens den halben Verschwenkweg g zurück, bevor er in den Bereich des Führungsblechs 66 gelangt. Der Zapfen 61 und die Öffnung 62 bilden Führungsteile der Führung 60. Auch eine andere Gestaltung von Führungsteilen kann vorgesehen sein. In Fig. 8 ist auch die Betätigungskontur 65 der Kniehebelanordnung 31 gezeigt.

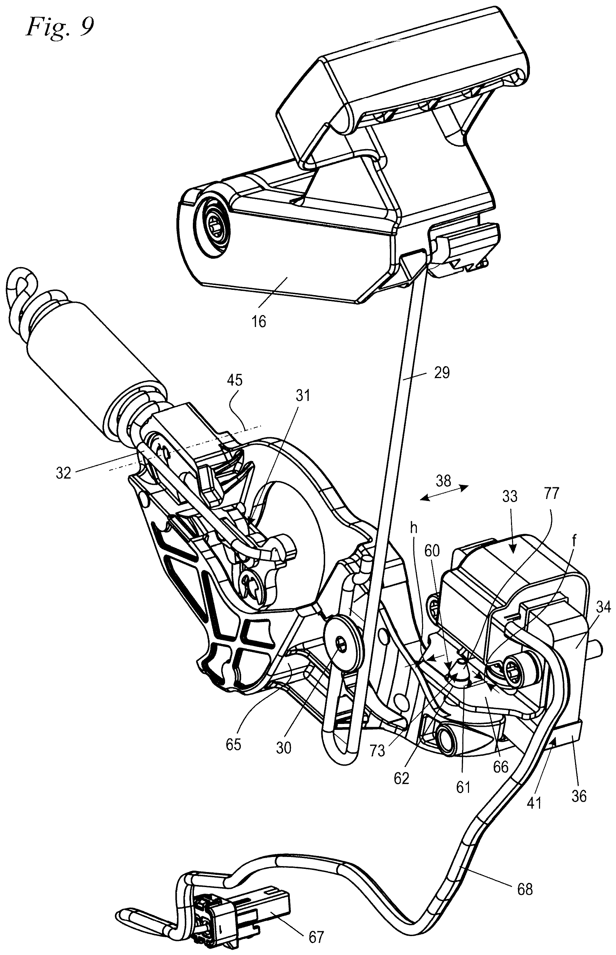

Fig. 9 zeigt die Gestaltung der Führung 60 im Einzelnen. Fig. 9 zeigt die Anordnung aus Elektromagnet 33, Schwenkhebel 28 und Betätigungshebel 16 dabei in fixierter Stellung 41 des Schwenkhebels 28. Der Anker 36 liegt am Joch 34 des Elektromagneten 33 an und wird von diesem gehalten. Der Zapfen 61 ragt in die Öffnung 62. Dabei besitzt der Zapfen 61 Spiel h in Querrichtung 38. Das Spiel h ist dabei vergleichsweise klein. Die Öffnung 62 ist als Langloch ausgebildet, wobei die Öffnung 62 ihre kleinste radiale Erstreckung in Querrichtung 38 besitzt. Senkrecht zur Schwenkachse 45 des Schwenkhebels 28 besitzt die Öffnung 32 deutlich größeres Spiel f gegenüber dem Zapfen 61. Das Spiel f ist in Fig. 9 ebenfalls schematisch eingezeichnet. Vorteilhaft beträgt das Spiel h in Querrichtung 38 0,05 mm bis 0,7 mm, insbesondere bis 0,5 mm. Als besonders vorteilhaft hat sich ein Spiel h in Querrichtung 38 von 0,1 mm bis 0,4 mm herausgestellt. Das Spiel f in Längsrichtung 37 beträgt vorteilhaft mindestens 1 mm, insbesondere mindestens 2 mm und ist auf die Länge des Zapfens 31 und den Abstand des Zapfens 31 von der Schwenkachse 45 abgestimmt.

Wie Fig. 9 auch zeigt, ist der Zapfen 61 mit einer Einführschräge 77 in Form eines konischen Abschnitts 73 versehen. Der Konus ist dabei vergleichsweise groß ausgebildet und erstreckt sich über mehr als die Hälfte des Durchmessers des Zapfens 61. Dadurch wird sichergestellt, dass der Zapfen 61 auch bei seitlichem Abstand zwischen der Mitte des Zapfens 61 und der Mitte der Öffnung 62 in die Öffnung 62 gelangt und sich in der Öffnung 62 weitgehend zentriert. Es kann vorgesehen sein, an dem Zapfen 61 und/oder der Öffnung 62 Maßnahmen zur Verminderung von Verschleiß aufgrund der im Betrieb auftretenden Vibrationen vorzusehen. Hierzu kann insbesondere der Zapfen 61 gehärtet und/oder das Führungsblech 66 zumindest im Bereich der Öffnung 62 mit vergrößerter Dicke ausgeführt sein. Wie Fig. 9 auch zeigt, ist der Elektromagnet 33 über eine elektrische Leitung 68 mit einem Anschlussstecker 67 zur Verbindung mit einer Steuereinrichtung verbunden. Die Steuereinrichtung ist bevorzugt die Steuereinrichtung 103, die auch den Drehratensensor aufweist, so dass der Elektromagnet 33 gelöst werden kann, wenn die Drehrate des Trennschleifers 1 einen vorgegebenen Wert übersteigt.

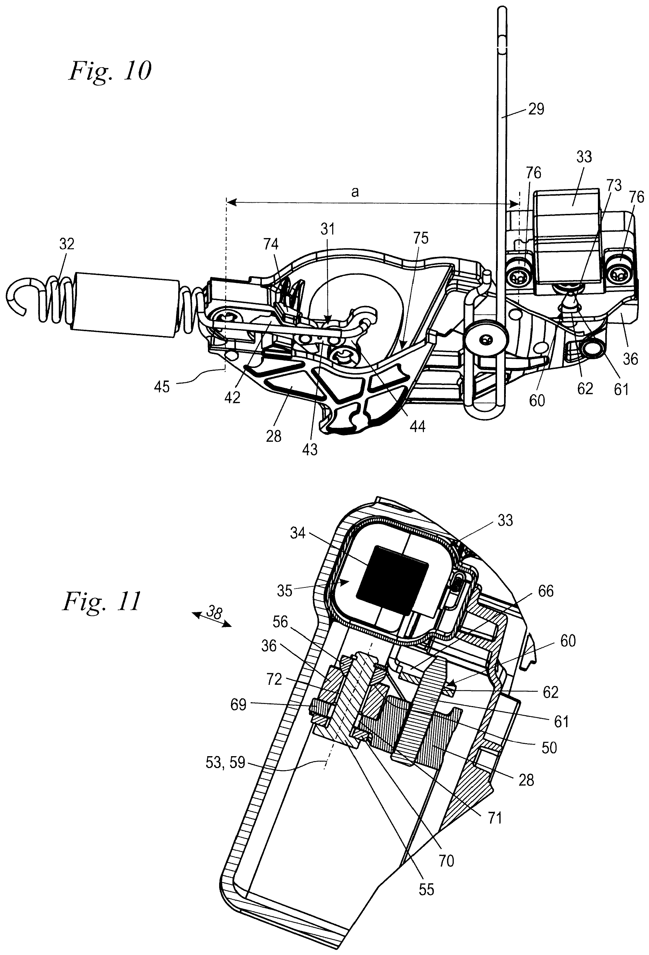

Wie Fig. 10 zeigt, besitzt die Schwenkachse 45 des Schwenkhebels 28 zur Befestigungsstelle des Elektromagneten 33 am Ausleger 7 einen Abstand a. Im Ausführungsbeispiel ist der Elektromagnet 33 mit zwei Befestigungsschrauben 76 am Ausleger 7 festgelegt. Der Abstand a ist dabei bis zu einer der Schwenkachse 45 am nächsten liegenden Befestigungsschraube 76, nämlich bis zu deren Mittelachse, gemessen. Der Abstand a ist vorteilhaft größer als 5 cm, insbesondere größer als 8 cm. Unter bestimmten Betriebsbedingungen können Querschwingungen am Ausleger 7 auftreten, die bei einem Abstand von mindestens 5 cm zu einer derartigen Relativbewegung des Elektromagneten 33 gegenüber dem freien Ende des Schwenkhebels 28 führen, dass der Anker 36 (Fig. 11) sich ungewollt vom Joch 34 des Elektromagneten 33 lösen kann. In Fig. 10 ist auch die Gestaltung der Kniehebelanordnung 31 sichtbar. Der Hebel 44 ist teilweise in einer Tasche 75 des Schwenkhebels 28 angeordnet, an deren Umfangswand die Betätigungskontur 65 (Fig. 9) ausgebildet ist.

Fig. 11 zeigt die Fixierung des Ankers 36 am Schwenkhebel 28. Der Anker 36 ist über einen Ankerbolzen 55 an einem Befestigungsabschnitt 69 des Schwenkhebels 28 fixiert. Im Ausführungsbeispiel ist auch der Zapfen 61 an dem Befestigungsabschnitt 69 angeordnet. Der Zapfen 61 und der Ankerbolzen 55 sind im gleichen Querschnitt, also bezogen auf die Querrichtung 38 nebeneinander, angeordnet. Der Ankerbolzen 55 durchragt den Befestigungsabschnitt 69 des Schwenkhebels 28 und den Anker 36. An der dem Befestigungsabschnitt 69 abgewandten Seite des Ankers 36 ist ein Schwenkgelenk 50 ausgebildet, über das der Anker 36 gegenüber dem Ankerbolzen 55 schwenkbar gelagert ist. Das Schwenkgelenk 50 besitzt im Ausführungsbeispiel einen Teilkugelabschnitt 56, der auf dem Ankerbolzen 55 fixiert ist. Im Ausführungsbeispiel ragt der Ankerbolzen 55 durch den Teilkugelabschnitt 56. Der Teilkugelabschnitt 56 ist im Ausführungsbeispiel durch eine Halbkugel gebildet, die eine mittige Öffnung zur Aufnahme des Ankerbolzens 55 besitzt. Der Teilkugelabschnitt 56 liegt auf der dem Befestigungsabschnitt 69 gegenüberliegenden Seite des Ankers 36 am Anker 36 an. Der Ankerbolzen 55 ragt durch eine Öffnung 61 des Befestigungsabschnitts 69 sowie eine Öffnung 72 des Ankers 36. Im Ausführungsbeispiel ist an der dem Befestigungsabschnitt 69 abgewandt liegenden Seite des Ankers 36 an dem die Öffnung 72 umgebenden Bereich eine Vertiefung ausgebildet, in der der Teilkugelabschnitt 56 gelagert ist.

An der dem Anker 36 abgewandten Seite des Befestigungsabschnitts 69 ist ein Dämpfungselement 70, beispielsweise ein Schaumstoff- oder Gummielement angeordnet, durch das der Ankerbolzen 55 ebenfalls ragt. Das Dämpfungselement 70 dämpft die Aufschlagskraft, wenn ein Bediener den Bedienhebel 16 betätigt und anschließend schlagartig loslässt. Der Kopf des Ankerbolzens 55 liegt im Ausführungsbeispiel am Dämpfungselement 70 an. In Fig. 11 ist auch die Öffnung 62 der Führung 60 gezeigt. Wie Fig. 11 auch zeigt, besitzt der Elektromagnet 33 eine Spule 35, die in Fig. 11 schematisch durch den die Spule 35 einnehmenden Bauraum gezeigt ist.

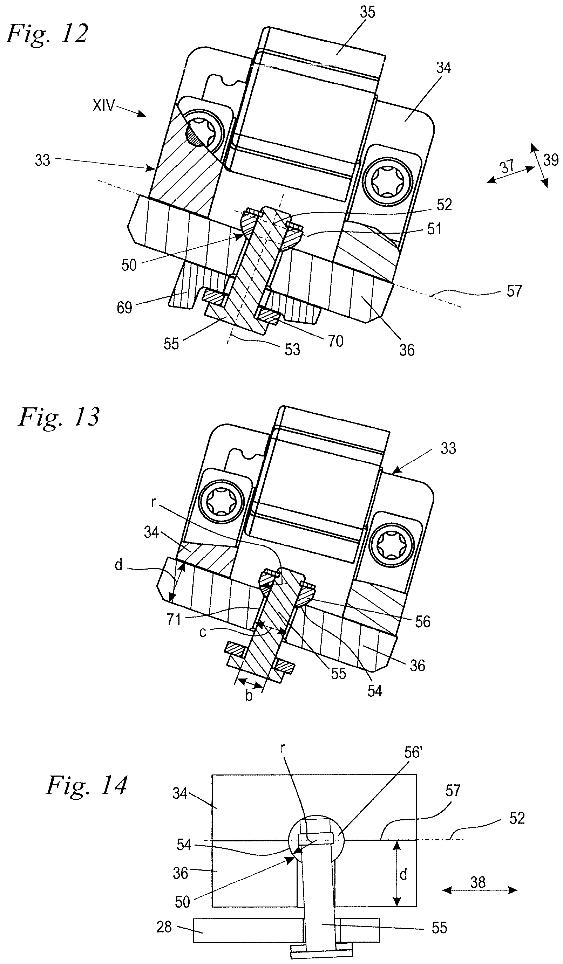

Wie Fig. 12 zeigt, liegt der Anker 36 an einer Anlageebene 57 an den Stirnseiten des Jochs 34 an. Im Ausführungsbeispiel ist der Elektromagnet 33 mit einem U-förmigen Joch und einem Flachanker ausgebildet. Es kann jedoch auch vorgesehen sein, dass der Anker als Tauchanker ausgebildet ist und in das Joch der Spule eintaucht. Die Bauform des Elektromagneten 33 ist unabhängig von der vorliegenden Erfindung. Das Schwenkgelenk 50 lässt Bewegungen des Ankers 36 gegenüber dem Ankerbolzen 55 um Schwenkachsen 51, 52 und 53 zu. Die Schwenkachse 53 ist die Längsmittelachse des Ankerbolzens 55. Die Schwenkachse 51 und die Schwenkachse 52 sind parallel zur Anlageebene 57 ausgerichtet, während die Schwenkachse 53 senkrecht zur Anlageebene 57 steht. Die Schwenkachse 52 ist dabei parallel zur Querrichtung 38 ausgerichtet und liegt in Fig. 12 senkrecht zur Blattebene. Die Schwenkachse 51 ist senkrecht zu den Schwenkachsen 52 und 53 ausgerichtet und liegt in einer durch die Längsrichtung 37 und die Hochrichtung 39 des Auslegers 7 aufgespannten Ebene. Wie Fig. 11 zeigt, besitzt der Ausleger 7 eine Ebene 59, die senkrecht zur Querrichtung 38 und damit senkrecht zur Schwenkachse 45 des Schwenkhebels 28 verläuft. Die Schwenkachsen 51 und 53 liegen in der Ebene 59, die der Schnittebene in Fig. 12 entspricht.

Wie Fig. 13 zeigt, besitzt die Öffnung 71 im Anker 36 einen Durchmesser c, der größer als ein Durchmesser b des Ankerbolzens 55 ist. Der Durchmesser b ist dabei in dem in der Öffnung 71 angeordneten Bereich des Ankerbolzens 55 gemessen. Der Durchmesser c kann beispielsweise etwa 1 mm bis 1,5 mm größer als der Durchmesser b sein. Der Anker 36 besitzt eine senkrecht zur Anlageebene 57 gemessene Dicke d. Der Teilkugelabschnitt 56 besitzt eine Lagerfläche 54, an der der Teilkugelabschnitt 56 an dem Anker 36 anliegt und mit diesem das Schwenkgelenk 50 bildet. Die Lagerfläche 54 besitzt einen Radius r. Das Verhältnis des Radius r der Lagerfläche 54 zur Dicke d des Ankers 36 beträgt vorteilhaft von 0,3 bis 2, insbesondere von 0,4 bis 1, bevorzugt von 0,4 bis 0,8. Der Radius der Lagerfläche 54 ist demnach höchstens doppelt so groß wie die Dicke d des Ankers 36. Der Radius r der Lagerfläche 54 ist vorteilhaft kleiner als die Dicke d des Ankers 36. Das Doppelte des Radius r ist vorteilhaft deutlich größer als der Durchmesser c der Öffnung 71. Dadurch, dass das Schwenkgelenk 50 auf der dem Elektromagneten 33 zugewandten Seite des Ankers 36 angeordnet ist und eine größere Erstreckung als die Öffnung 71 besitzt, wird der Anker 36 durch den am Ankerbolzen 55 festgelegten Teilkugelabschnitt 56 an dem Ankerbolzen 55 gesichert. Der Anker 36 ist zwischen dem Befestigungsabschnitt 69 (Fig. 12) des Schwenkhebels 28 und dem Schwenkgelenk 50 angeordnet und durch diese in Längsrichtung des Ankerbolzens 55 gesichert.

Im Ausführungsbeispiel steht der Teilkugelabschnitt 56 über die dem Elektromagneten 33 zugewandte Stirnseite des Ankers 36 über und erstreckt sich in den zwischen den Schenkeln des Jochs 34 gebildeten Freiraum. Dadurch wird der magnetische Fluss im Anker 36 vergleichsweise wenig beeinträchtigt und eine geringe Bauhöhe realisiert. Der Anker 36 ist ohne zusätzliche Befestigungsmittel am Ankerbolzen 55 fixiert. Es kann jedoch auch zweckmäßig sein, die Schwenkachsen 51, 52 des Ankers 36 in der Anlageebene 57 oder an der dem Joch 34 abgewandten Seite der Anlageebene 57 anzuordnen.

Es kann vorteilhaft sein, anstelle des Teilkugelabschnitts 56 eine Kugel, Walze oder Teilwalze vorzusehen. Bei Walze und Teilwalze kann der Anker 36 nur um eine parallel zur Anlageebene 57 liegende Achse verkippen, während bei Kugel und Teilkugel ein Verkippen um alle durch den Kugelmittelpunkt verlaufenden, parallel zur Anlageebene 57 liegenden Achsen möglich ist. Die vorstehenden Merkmale des Teilkugelabschnitts 56 und die Anordnung der Schwenkachsen 51 und 52 sind - ggf. in angepasster Form - auch für Kugel, Walze und Teilwalze vorteilhaft. Fig. 14 zeigt ein Ausführungsbeispiel des Schwenkgelenks 50, bei dem das Schwenkgelenk durch einen Teilkugelabschnitt 56' gebildet ist. Der Teilkugelabschnitt 56' ist eine Kugel, durch die der Ankerbolzen 55 ragt. Der Mittelpunkt des Teilkugelabschnitts 56 liegt näherungsweise in der Anlageebene 57. Beim Ausführungsbeispiel nach Fig. 13 liegt der Mittelunkt des Teilkugelabschnitts 56, also die zweite Schwenkachse 52, an der dem Anker 36 abgewandten Seite der Anlageebene 57. Der Abstand der Schwenkachse 52 zur Anlageebene 57 ist kleiner als der Radius r. Der Teilkugelabschnitt 56 taucht demnach mindestens teilweise in eine Vertiefung des Ankers 36 ein. Fig. 14 zeigt die Anordnung nach einer Verschiebung des Jochs 34 gegenüber dem Schwenkhebel 28 in Querrichtung 38. Aufgrund der Verschiebung stellt sich der Ankerbolzen 55 schräg. Das Schwenkgelenk 50 bewirkt, dass sich der Anker 36 gegenüber dem Ankerbolzen 55 in entgegengesetzter Richtung verschwenken kann, so dass der Anker 36 an der Anlagefläche 57 nicht vom Joch 34 abhebt. Dadurch bleiben die Haltekräfte erhalten und werden nicht verringert. Die dem Joch 34 zugewandte Seite des Ankers 6 liegt in der Anlageebene 57.

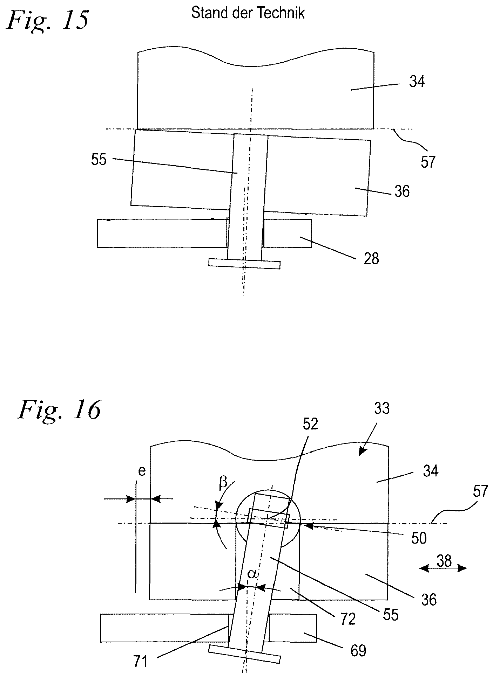

Fig. 15 zeigt eine Anordnung nach dem Stand der Technik, wobei gleiche Bezugszeichen für die der Erfindung entsprechenden Bauteile verwendet sind. Im Stand der Technik ist der Ankerbolzen 55 gegenüber dem Schwenkhebel 28 schwenkbar gelagert. Der Anker 36 ist am Ankerbolzen 55 jedoch drehfest fixiert. Verkippt der Ankerbolzen 55 aufgrund einer Relativbewegung von Anker 36 und Elektromagnet 33 gegenüber dem Schwenkhebel 38, so kippt auch der Anker 36 gegenüber der Anlageebene 57 und hebt dadurch vom Joch 34 ab. Dadurch können die Haltekräfte des Elektromagneten 33 überwunden werden, und der Schwenkhebel 38 wird in seine gelöste Stellung verstellt.

Fig. 16 zeigt die Anordnung nach der Erfindung. Um dem in Querrichtung 38 verschobenen Elektromagneten 33 zu folgen, verkippt der Ankerbolzen 55 gegenüber dem Befestigungsabschnitt 69 des Schwenkhebels 28 und der Anker 36 kann gegenüber dem Ankerbolzen 55 in Gegenrichtung verschwenken. Dadurch bleibt der Anker 36 in der Anlageebene 57 an beiden Längsseiten in Kontakt mit dem Joch 34, und ein Abheben des Ankers 36 vom Joch 34 findet nicht statt. Fig. 16 zeigt die Anordnung, nachdem sich der Elektromagnet 33 mit dem Joch 34 um die im Betrieb maximal auftretende Verschiebung e in Querrichtung 38 verschoben hat. Aufgrund dieser Verschiebung verkippt der Ankerbolzen 55 gegenüber seiner Neutrallage um einen Kippwinkel a. Der Winkel a kann beispielsweise von 5° bis 20°, insbesondere von 8° bis 15° betragen. Der Anker 36 verschwenkt gegenüber dem Ankerbolzen 55 in Gegenrichtung um einen Schwenkwinkel β. Der Schwenkwinkel β, um den der Anker 36 gegenüber dem Ankerbolzen 55 verschwenkbar ist, insbesondere um die Schwenkachse 52, ist auf den Kippwinkel α abgestimmt und mindestens so groß wie der Kippwinkel a. Auf diese Weise ist sichergestellt, dass stets, also bis zur maximalen Verschiebung e, eine vollständige Kompensation der Schrägstellung des Ankerbolzens 55 durch das Schwenkgelenk 50 bewirkt ist. Der Schwenkwinkel β ist dabei nicht nur abhängig von der Gestaltung des Schwenkgelenks 50, sondern auch von der Geometrie der Öffnungen 71 und 72, dem Durchmesser b des Ankerbolzens 55 und der Dicke d des Ankers 36.

Das Schwenkgelenk 50 ist vorteilhaft aus einem formstabilen Material gebildet. Der Anker 36 besteht aus Metall. Vorteilhaft ist die Lagerfläche 54 am Anker 36 durch das Metall des Ankers 36 gebildet. Der Teilkugelabschnitt 56, der die gegenwirkende Lagerfläche bildet, besteht vorteilhaft aus Metall oder formstabilem Kunststoff.

## Patentansprüche

1. Handgeführtes Arbeitsgerät mit einem Werkzeug und mit einer Bremseinrichtung (15) für das Werkzeug, wobei die Bremseinrichtung (15) ein Betätigungselement besitzt, das auf ein Bremselement der Bremseinrichtung (15) wirkt, wobei das Betätigungselement zwischen einer fixierten Stellung (41), in der das Bremselement das Werkzeug nicht bremst, und einer gelösten Stellung (40), in der das Bremselement das Werkzeug bremst, bewegbar ist, wobei die Bremseinrichtung (15) einen Elektromagneten (33) zur Fixierung des Betätigungselements in der fixierten Stellung (41) besitzt, wobei der Elektromagnet (33) ein Joch (34) und eine Spule (35) umfasst und wobei der Elektromagnet (33) mit einem Anker (36) zusammenwirkt, wobei der Anker (36) an dem Betätigungselement durch einen Ankerbolzen (55) gehalten ist, **dadurch gekennzeichnet, dass** der Anker (36) über ein Schwenkgelenk (50) an dem Ankerbolzen (55) um mindestens eine Schwenkachse (51, 52, 53) schwenkbar gelagert ist.

2. Arbeitsgerät nach Anspruch 1,
**dadurch gekennzeichnet, dass** der Anker (36) in der fixierten Stellung (41) an einer Anlageebene (57) an dem Joch (34) anliegt und dass mindestens eine Schwenkachse (51, 52) parallel zur Anlageebene (57) liegt.

3. Arbeitsgerät nach Anspruch 2,
**dadurch gekennzeichnet, dass** das Joch (34) in Richtung parallel zur Anlageebene (57) gegenüber dem Betätigungselement verschiebbar ist, und dass der Schwenkwinkel (β), um den der Anker (36) gegenüber dem Ankerbolzen (55) um die Schwenkachse (51, 52) kippbar ist, mindestens so groß ist wie der Kippwinkel (a), um den der Ankerbolzen (55) bei der maximalen Verschiebung (e) des Jochs (34) gegenüber dem Betätigungselement verkippt wird.

4. Arbeitsgerät nach einem der Ansprüche 1 bis 3,
**dadurch gekennzeichnet, dass** das Betätigungselement ein Schwenkhebel (28) ist und dass mindestens eine Schwenkachse (51, 53) in einer senkrecht zur Schwenkachse (45) des Schwenkhebels (28) angeordneten Ebene (59) liegt.

5. Arbeitsgerät nach einem der Ansprüche 1 bis 4,
**dadurch gekennzeichnet, dass** das Schwenkgelenk (50) eine gekrümmte Lagerfläche (54) besitzt.

6. Arbeitsgerät nach Anspruch 5,
**dadurch gekennzeichnet, dass** das Verhältnis des Radius (r) der Lagerfläche (54) zur Dicke (d) des Ankers (36) von 0,3 bis 2 beträgt.

7. Arbeitsgerät nach einem der Ansprüche 1 bis 6,
**dadurch gekennzeichnet, dass** die Schwenkachse (51, 52) des Ankers (36) auf der dem Joch (34) zugewandten Seite des Ankers (36) liegt.

8. Arbeitsgerät nach einem der Ansprüche 1 bis 7,
**dadurch gekennzeichnet, dass** der Ankerbolzen (55) durch den Anker (36) und einen Befestigungsabschnitt (69) des Betätigungselements ragt, und dass der Ankerbolzen (55) gegenüber dem Betätigungselement schwenkbar ist.

9. Arbeitsgerät nach einem der Ansprüche 1 bis 8, wobei das Arbeitsgerät ein Trennschleifer (1) ist, der einen Ausleger (7) besitzt, an dem eine das Werkzeug bildende Trennscheibe (8) um eine Drehachse (58) drehbar gelagert ist, wobei der Ausleger (7) eine Längsrichtung (37) besitzt, in der die größte Erstreckung des Auslegers (7) senkrecht zur Drehachse (58) liegt, und wobei der Ausleger (7) eine parallel zur Drehachse (58) verlaufende Querrichtung (38) und eine senkrecht zur Querrichtung (38) und senkrecht zur Längsrichtung (37) verlaufende Hochrichtung (39) besitzt, wobei das Joch (34) an dem Ausleger fixiert ist, wobei eine Führung (60) vorgesehen ist, die ein erstes, mit dem Anker (36) verbundenes Führungsteil und ein zweites, mit dem Joch (34) verbundenes Führungsteil umfasst, wobei das erste Führungsteil und das zweite Führungsteil in fixierter Stellung (41) des Betätigungselements zusammenwirken und den Anker (36) relativ zu dem Joch (34) in Querrichtung (38) des Auslegers (7) führen.

10. Arbeitsgerät nach Anspruch 9,
**dadurch gekennzeichnet, dass** eines der Führungsteile ein Zapfen (61) ist und das andere Führungsteil eine Öffnung (62) besitzt, wobei der Zapfen (61) in fixierter Stellung (41) des Betätigungselements in die Öffnung (62) ragt.

11. Arbeitsgerät nach Anspruch 10,
**dadurch gekennzeichnet, dass** in fixierter Stellung (41) des Betätigungselements in Querrichtung (38) des Auslegers (7) Spiel zwischen dem Zapfen (61) und dem Rand der Öffnung (62) besteht.

12. Arbeitsgerät nach einem der Ansprüche 9 bis 11,
**dadurch gekennzeichnet, dass** die Führungsteile in gelöster Stellung (40) des Betätigungselements voneinander entfernt angeordnet sind und erst nach Überstreichen von mindestens dem halben Verstellweg (g) von der gelösten Stellung (40) zur fixierten Stellung (41) zusammenwirken.

13. Arbeitsgerät nach einem der Ansprüche 9 bis 12,
**dadurch gekennzeichnet, dass** mindestens eines der Führungsteile eine Einführschräge (77) besitzt.

14. Arbeitsgerät nach einem der Ansprüche 9 bis 13,
**dadurch gekennzeichnet, dass** das Betätigungselement ein Schwenkhebel (28) ist und dass der Abstand (a) der Schwenkachse (45) des Schwenkhebels (28) zur Befestigungsstelle des Elektromagneten (33) am Ausleger (7) mindestens 5 cm beträgt.

15. Arbeitsgerät nach einem der Ansprüche 1 bis 14,
**dadurch gekennzeichnet, dass** die Bremsvorrichtung (15) eine Kniehebelanordnung (31) aufweist, die einen ersten Hebel (42) und einen zweiten Hebel (43) umfasst, wobei der erste Hebel (42) um eine erste Schwenkachse (45) gegenüber dem Betätigungselement schwenkbar gelagert ist, wobei der zweite Hebel (43) an dem ersten Hebel (42) um eine zweite Schwenkachse (45) schwenkbar gelagert ist, wobei der zweite Hebel (42) an einer dritten Schwenkachse (47) an einem dritten Hebel (44) gelagert ist, wobei der dritte Hebel (44) auf das Bremselement wirkt, wobei die erste Schwenkachse (45) und die dritte Schwenkachse (47) in einer Kipphebelebene (49) liegen und wobei die zweite Schwenkachse (46) in der gelösten Stellung (40) und in der fixierten Stellung (41) auf der gleichen Seite der Kipphebelebene (49) angeordnet ist.

16. Arbeitsgerät nach einem der Ansprüche 1 bis 15,
**dadurch gekennzeichnet, dass** das Schwenkgelenk (50) aus einem formstabilen Material besteht.

## Claims

1. Handheld work apparatus, with a tool and with a brake unit (15) for the tool, the brake unit (15) having an actuating element which acts on a brake element of the brake unit (15), the actuating element being movable between a fixed position (41), in which the brake element does not brake the tool, and a released position (40), in which the brake element brakes the tool, the brake unit (15) having an electromagnet (33) for fixing the actuating element in the fixed position (41), the electromagnet (33) comprising a yoke (34) and a coil (35), and the electromagnet (33) interacting with an anchor (36), the anchor (36) being held on the actuating element by an anchor pin (55), **characterized in that** the anchor (36) is mounted via a pivot joint (50) on the anchor pin (55) so as to be pivotable about at least one pivot axis (51, 52, 53).

2. Work apparatus according to Claim 1,
**characterized in that**, in the fixed position (41), the anchor (36) lies against a contact plane (57) on the yoke (34), and **in that** at least one pivot axis (51, 52) lies parallel to the contact plane (57).

3. Work apparatus according to Claim 2,
**characterized in that** the yoke (34) is displaceable in relation to the actuating element in a direction parallel to the contact plane (57), and **in that** the pivot angle (β) about which the anchor (36) is tiltable about the pivot axis (51, 52) in relation to the anchor pin (55) is at least as large as the tilting angle (α) about which the anchor pin (55) is tilted in relation to the actuating element upon the maximum displacement (e) of the yoke (34).

4. Work apparatus according to one of Claims 1 to 3,
**characterized in that** the actuating element is a pivot lever (28), and **in that** at least one pivot axis (51, 53) lies in a plane (59) arranged perpendicularly to the pivot axis (45) of the pivot lever (28).

5. Work apparatus according to one of Claims 1 to 4,
**characterized in that** the pivot joint (50) has a curved bearing surface (54).

6. Work apparatus according to Claim 5,
**characterized in that** the ratio of the radius (r) of the bearing surface (54) to the thickness (d) of the anchor (36) is from 0.3 to 2.

7. Work apparatus according to one of Claims 1 to 6,
**characterized in that** the pivot axis (51, 52) of the anchor (36) lies on that side of the anchor (36) which faces the yoke (34).

8. Work apparatus according to one of Claims 1 to 7,
**characterized in that** the anchor pin (55) protrudes through the anchor (36) and a fastening section (69) of the actuating element, and **in that** the anchor pin (55) is pivotable in relation to the actuating element.

9. Work apparatus according to one of Claims 1 to 8, the work apparatus being a cut-off machine (1) which has a cantilever (7) on which a cutting disk (8) forming the tool is mounted rotatably about a rotational axis (58), the cantilever (7) having a longitudinal direction (37) in which the greatest extent of the cantilever (7) lies perpendicular to the rotational axis (58), and the cantilever (7) having a transverse direction (38) running parallel to the rotational axis (58) and a vertical direction (39) running perpendicularly to the transverse direction (38) and perpendicularly to the longitudinal direction (37), the yoke (34) being fixed to the cantilever, a guide (60) being provided which comprises a first guide part connected to the anchor (36) and a second guide part connected to the yoke (34), the first guide part and the second guide part interacting in a fixed position (41) of the actuating element and guiding the anchor (36) relative to the yoke (34) in the transverse direction (38) of the cantilever (7).

10. Work apparatus according to Claim 9,
**characterized in that** one of the guide parts is a lug (61) and the other guide part has an opening (62), wherein the lug (61) protrudes into the opening (62) in the fixed position (41) of the actuating element.

11. Work apparatus according to Claim 10,
**characterized in that**, in the fixed position (41) of the actuating element, there is play between the lug (61) and the edge of the opening (62) in the transverse direction (38) of the cantilever (7).

12. Work apparatus according to one of Claims 9 to 11,
**characterized in that**, in the released position (40) of the actuating element, the guide parts are arranged remote from each other and interact only after crossing at least half the adjustment distance (g) from the released position (40) to the fixed position (41).

13. Work apparatus according to one of Claims 9 to 12,
**characterized in that** at least one of the guide parts has an insertion chamfer (77).

14. Work apparatus according to one of Claims 9 to 13,
**characterized in that** the actuating element is a pivot lever (28), and **in that** the distance (a) of the pivot axis (45) of the pivot lever (28) from the fastening point of the electromagnet (33) to the cantilever (7) is at least 5 cm.

15. Work apparatus according to one of Claims 1 to 14,
**characterized in that** the brake device (15) has a knee lever arrangement (31) which comprises a first lever (42) and a second lever (43), wherein the first lever (42) is mounted pivotably about a first pivot axis (45) in relation to the actuating element, wherein the second lever (43) is mounted on the first lever (42) so as to be pivotable about a second pivot axis (45), wherein the second lever (42) is mounted on a third pivot axis (47) on a third lever (44), wherein the third lever (44) acts on the brake element, wherein the first pivot axis (45) and the third pivot axis (47) lie in a rocker arm plane (49), and wherein, in the released position (40) and in the fixed position (41), the second pivot axis (46) is arranged on the same side of the rocker arm plane (49).

16. Work apparatus according to one of Claims 1 to 15,
**characterized in that** the pivot joint (50) is composed of a dimensionally stable material.

## Revendications

1. Appareil de travail tenu à la main comprenant un outil et comprenant un dispositif de freinage (15) pour l'outil, le dispositif de freinage (15) présentant un élément d'actionnement qui agit sur un élément de freinage du dispositif de freinage (15), l'élément d'actionnement étant mobile entre une position fixée (41), dans laquelle l'élément de freinage ne freine pas l'outil, et une position desserrée (40), dans laquelle l'élément de freinage freine l'outil, le dispositif de freinage (15) présentant un électroaimant (33) servant à la fixation de l'élément d'actionnement dans la position fixée (41), l'électroaimant (33) comportant une culasse (34) et une bobine (35) et l'électroaimant (33) coopérant avec une armature (36), l'armature (36) étant retenue sur l'élément d'actionnement au moyen d'un boulon d'armature (55),
**caractérisé en ce que** l'armature (36) est montée pivotante autour d'au moins un axe de pivotement (51, 52, 53) sur le boulon d'armature (55) par le biais d'une articulation pivotante (50).

2. Appareil de travail selon la revendication 1,
**caractérisé en ce que** l'armature (36) s'appuie contre la culasse (34) au niveau d'un plan d'appui (57) dans la position fixée (41) et **en ce qu'**au moins un axe de pivotement (51, 52) est situé parallèlement au plan d'appui (57).

3. Appareil de travail selon la revendication 2,
**caractérisé en ce que** la culasse (34) est déplaçable par rapport à l'élément d'actionnement dans la direction parallèle au plan d'appui (57), et **en ce que** l'angle de pivotement (β), sur lequel l'armature (36) peut être basculée autour de l'axe de pivotement (51, 52) par rapport au boulon d'armature (55), est au moins aussi grand que l'angle de basculement (a), sur lequel le boulon d'armature (55) est basculé en cas de déplacement maximal (e) de la culasse (34) par rapport à l'élément d'actionnement.

4. Appareil de travail selon l'une des revendications 1 à 3,
**caractérisé en ce que** l'élément d'actionnement est un levier pivotant (28) et **en ce qu'**au moins un axe de pivotement (51, 53) est situé dans un plan (59) disposé perpendiculairement à l'axe de pivotement (45) du levier pivotant (28).

5. Appareil de travail selon l'une des revendications 1 à 4,
**caractérisé en ce que** l'articulation pivotante (50) présente une surface portante (54) incurvée.

6. Appareil de travail selon la revendication 5,
**caractérisé en ce que** le rapport du rayon (r) de la surface portante (54) à l'épaisseur (d) de l'armature (36) vaut de 0,3 à 2.

7. Appareil de travail selon l'une des revendications 1 à 6,
**caractérisé en ce que** l'axe de pivotement (51, 52) de l'armature (36) est situé sur le côté de l'armature (36) tourné vers la culasse (34).

8. Appareil de travail selon l'une des revendications 1 à 7,
**caractérisé en ce que** le boulon d'armature (55) fait saillie à travers l'armature (36) et une partie de fixation (69) de l'élément d'actionnement, et **en ce que** le boulon d'armature (55) est pivotant par rapport à l'élément d'actionnement.

9. Appareil de travail selon l'une des revendications 1 à 8, l'appareil de travail étant une tronçonneuse à meule (1) qui présente un bras en porte-à-faux (7) sur lequel une meule de tronçonnage (8) formant l'outil est montée de manière à pouvoir tourner autour d'un axe de rotation (58), le bras en porte-à-faux (7) présentant une direction longitudinale (37) dans laquelle la plus grande étendue du bras en porte-à-faux (7) se situe perpendiculairement à l'axe de rotation (58), et le bras en porte-à-faux (7) présentant une direction transversale (38) s'étendant parallèlement à l'axe de rotation (58) et une direction verticale (39) s'étendant perpendiculairement à la direction transversale (38) et perpendiculairement à la direction longitudinale (37), la culasse (34) étant fixée au bras en porte-à-faux, un guide (60) étant prévu, lequel comporte une première partie de guidage reliée à l'armature (36) et une deuxième partie de guidage reliée à la culasse (34), la première partie de guidage et la deuxième partie de guidage coopérant dans la position fixée (41) de l'élément d'actionnement et guidant l'armature (36) relativement à la culasse (34) dans la direction transversale (38) du bras en porte-à-faux (7).

10. Appareil de travail selon la revendication 9,
**caractérisé en ce que** l'une des parties de guidage est un tourillon (61) et l'autre partie de guidage présente une ouverture (62), le tourillon (61) faisant saillie dans l'ouverture (62) dans la position fixée (41) de l'élément d'actionnement.

11. Appareil de travail selon la revendication 10,
**caractérisé en ce que**, dans la position fixée (41) de l'élément d'actionnement, un jeu existe entre le tourillon (61) et le bord de l'ouverture (62) dans la direction transversale (38) du bras en porte-à-faux (7).

12. Appareil de travail selon l'une des revendications 9 à 11,
**caractérisé en ce que** les parties de guidage sont disposées de manière éloignée l'une de l'autre dans la position desserrée (40) de l'élément d'actionnement et ne coopèrent qu'après le franchissement d'au moins la demi-course de déplacement (g) de la position desserrée (40) à la position fixée (41).

13. Appareil de travail selon l'une des revendications 9 à 12,
**caractérisé en ce qu'**au moins l'une des parties de guidage présente un biseau d'insertion (77).

14. Appareil de travail selon l'une des revendications 9 à 13,
**caractérisé en ce que** l'élément d'actionnement est un levier pivotant (28) et **en ce que** la distance (a) de l'axe de pivotement (45) du levier pivotant (28) au point de fixation de l'électroaimant (33) au bras en porte-à-faux (7) vaut au moins 5 cm.

15. Appareil de travail selon l'une des revendications 1 à 14,
**caractérisé en ce que** le dispositif de freinage (15) comprend un ensemble de leviers à genouillère (31) qui comporte un premier levier (42) et un deuxième levier (43), le premier levier (42) étant monté pivotant par rapport à l'élément d'actionnement autour d'un premier axe de pivotement (45), le deuxième levier (43) étant monté pivotant autour d'un deuxième axe de pivotement (45) sur le premier levier (42), le deuxième levier (42) étant monté sur un troisième levier (44) au niveau d'un troisième axe de pivotement (47), le troisième levier (44) agissant sur l'élément de freinage, le premier axe de pivotement (45) et le troisième axe de pivotement (47) se situant dans un plan de levier basculant (49) et le deuxième axe de pivotement (46) étant disposé sur le même côté du plan de levier basculant (49) dans la position desserrée (40) et dans la position fixée (41).

16. Appareil de travail selon l'une des revendications 1 bis 15,
**caractérisé en ce que** l'articulation pivotante (50) est constituée d'un matériau à stabilité de forme.
